# EUROPÄISCHE PATENTSCHRIFT

(11) **EP 2 466 682 B1**
(45) Veröffentlichungstag und Bekanntmachung des Hinweises auf die Patenterteilung: **17.09.2014**
(21) Anmeldenummer: 11191250.7
(22) Anmeldetag: 30.11.2011
(51) Int. Cl.: H01Q 1/32, H01Q 9/04, H01Q 21/28, G01S 19/36, G07C 7/00

(54) **Bordinformationssystem mit Antenne zum Empfang satellitenbasierter Geopositionsdaten**
On-board information system with antenna for receiving satellite-based geo-position data
Système d'information à bord doté d'une antenne destinée à la réception de données de géolocalisation par satellite

(30) Priorität: 20.12.2010 DE 102010055205; 11.03.2011 DE 102011013667
(43) Veröffentlichungstag der Anmeldung: 20.06.2012
(73) Patentinhaber: Continental Automotive GmbH, 30165 Hannover (DE)
(72) Erfinder: Peulecke, Jens, 78048 Villingen-Schwenningen (DE); Wahler, Torsten, 78073 Bad Dürrheim (DE)

(56) Entgegenhaltungen:
- EP-A1- 1 790 530
- KR-A- 20100 053 984
- US-A1- 2003 020 657
- US-B1- 7 142 980

## Beschreibung

Die vorliegende Erfindung betrifft ein Bordinformationssystem mit einer Antenne zum Empfang satellitenbasierter Geopositionsdaten.

Bordinformationssysteme, insbesondere Tachographen, Mauterfassungsgeräte oder sogenannte Universal Onboard Units, die die Funktionen von Tachographen und Mauterfassungsgeräten kombinieren, müssen immer höhere technische Anforderungen erfüllen. Insbesondere die Möglichkeiten, die Position eines Fahrzeugs, beispielsweise eines Lastkraftwagens, durch ein Geopositionssystem zu verfolgen, bietet eine Vielzahl von neuen Anwendungsmöglichkeiten, beispielsweise zur Mauterfassung, Navigation oder Überwachung sicherheitsrelevanter Güter während eines Transports.

Aus dem Stand der Technik sind bereits derartige Vorrichtungen bekannt. Die Druckschrift EP 1 328 041 A1 offenbart beispielsweise einen in einem Mautrechner angeordneten Empfänger für Daten des Global Positioning Systems (GPS). Nachteilig am bisher bekannten Stand der Technik ist jedoch, dass ein Empfängermodul für Geopositionsdaten zwar in ein Gehäuse eines Mauterfassungssystems integriert sein kann, die dazugehörige Antenne jedoch außerhalb des Gehäuses an einer anderen Position des Fahrzeugs angebracht wird. Diese Anbringung in der Nähe einer Scheibe oder außerhalb des Fahrzeuginnenraums ist notwendig, da Signale von Geopositionssatelliten im Vergleich zu Mobilfunksignalen wesentlich schwächer sind. So weisen Mobilfunksignale nach dem GSM-Standard eine Signalstärke von zwischen 3 dB und -6 dB auf, während Signale von Geopositionssatelliten auf der Erdoberfläche eine Signalstärke von - 140 dB bis -160 dB aufweisen.

Die Druckschrift US 7 142 980 B1 offenbart beispielsweise ein GPS-System, das direkt unterhalb einer Frontscheibe auf einer Instrumententafel eines Fahrzeugs angebracht wird.

Auch die Druckschrift US 2003/0020657 A1 offenbart eine Antenne, die auf der Instrumententafel angeordnet ist.

Aus der Druckschrift KR 2010 005 39 84 A ist ein Telematikgerät bekannt, bei dem sämtliche Antennen nebeneinander an einer Frontseite des Geräts angeordnet sind.

Aufgrund der schwachen Geopositionssignale ist oftmals sogar eine Anbringung an einer Außenseite des Fahrzeugs, mithin also eine direkte Sicht der Antenne auf die sendenden Satelliten, notwendig. Dies ist insbesondere nachteilig, da hiermit neben einer Befestigung der Antenne eine zusätzliche drahtgebundene oder drahtlose Verbindung zwischen Antenne und dem im Gehäuse des Bordinformationssystems untergebrachten Empfängermodul hergestellt werden muss.

Der vorliegenden Erfindung liegt damit die Aufgabe zugrunde, ein Bordinformationssystem mit einer Antenne zum Empfang satellitenbasierter Geopositionsdaten zu entwickeln, welches die genannten Nachteile vermeidet.

Diese Aufgabe wird erfindungsgemäß gelöst durch ein Bordinformationssystem mit den Merkmalen des Hauptanspruchs. Vorteilhafte Ausgestaltungen und Weiterentwicklungen der Erfindung ergeben sich mit den Merkmalen der Unteransprüche.

Ein erfindungsgemäßes Bordinformationssystem, welches zur Erfassung mindestens einer fahrzeugrelevanten Größe ausgebildet ist, umfasst ein in einen Fahrzeuginnenraum einbaubares Gehäuse und ein Modul zur Verarbeitung satellitenbasierter Geopositionsdaten, wobei eine Antenne zum Empfang der satellitenbasierten Geopositionsdaten derart am Gehäuse des Bordinformationssystems angeordnet ist, dass im eingebauten Zustand eine Empfangsrichtung zum Fahrzeuginnenraum gerichtet ist.

Das Gehäuse des Bordinformationssystems umfasst somit ein Modul zur Verarbeitung der empfangenen Geopositionssignale und bildet eine kompakte und leicht einzubauende Einheit. Die Antenne wird auch als zum Empfang notwendiges Bauteil in kompakter Weise integriert, wobei zum besseren Empfang der nur eine geringe Signalstärke aufweisenden Geopositionssignale die Empfangsrichtung der Antenne in den Fahrzeuginnenraum gerichtet ist. Anderenfalls wäre die Empfangsrichtung in den Motorblock oder ein anderes Bauteil eines Fahrzeugs gerichtet, welches elektrisch leitfähige Teile aufweist, wodurch der Empfang erschwert wäre.

Gegenüber aus dem Stand der Technik bekannten Bordinformationssystemen bietet eine erfindungsgemäße Lösung den Vorteil, sämtliche zum Empfang von satellitenbasierten Geopositionsdaten benötigten Komponenten in einem Gehäuse zu vereinen, sodass die so entstandene Einheit leicht und schnell in Fahrzeuge ein- und ausbaubar ist und bei der die Antenne zum Empfang satellitenbasierter Geopositionsdaten nicht mehr separat an einer anderen Position des Fahrzeugs positioniert werden muss.

In vorteilhafter Weise kann vorgesehen sein, dass das Gehäuse eine nur eine Seite des Gehäuses bedeckende Blende aufweist, wobei das Gehäuse in einem Bereich hinter der Blende mindestens ein Befestigungselement für einen festen Einbau im Fahrzeuginnenraum aufweist. Durch das Befestigungselement kann dass Gehäuse somit sicher im Fahrzeuginnenraum angebracht werden, wobei die Seite des Gehäuses, an der die Blende angebracht ist, einem Benutzer des Bordinformationssystems zugänglich sein und in den Fahrzeuginnenraum weisen kann. Die Blende schützt das Gehäuse somit vor mechanischer Beeinträchtigung und erhöht die Ästhetik des Gehäuses.

In einer vorteilhaften Weiterbildung kann die Antenne als Patch-Antenne ausgeführt sein, was eine kostengünstige Herstellung der Antenne sowie eine platzsparende Anordnung am Gehäuse ermöglicht. Weiterhin kann über eine Patch-Antenne sehr gut eine Richtwirkung, also eine bevorzugte Empfangsrichtung der Antenne, beispielsweise in Richtung des Fahrzeuginnenraums, eingestellt werden.

In besonders vorteilhafter Weise kann ein Empfangskörper der Antenne mittig auf einer Massefläche der Antenne platziert sein. Die Leistung einer Antenne, insbesondere einer Patch-Antenne, wird positiv durch eine möglichst große und vorzugsweise gleichmäßig um den Empfangskörper verteilte Massefläche beeinflusst, sodass durch eine derartige Anordnung auch schwache Geopositionssignale noch empfangen werden können. Weiter kann vorgesehen sein, dass die Massefläche der Antenne in vorteilhafter Weise eine kaschierte Leiterplatte umfasst, wobei die Kaschierung vorzugsweise mit Kupfer vollzogen wurde. Durch das Kaschieren der Leiterplatte wird eine platzsparende und dennoch leitfähige Leiterplatte realisiert, welche einfach an das Gehäuse des Bordinformationssystems angebracht werden kann.

In besonders vorteilhafter Weise kann die Antenne zum Empfang von Geopositionsdaten an einem in den Fahrzeuginnenraum vorstehenden Teil des Gehäuses angebracht sein. Hierfür bietet sich insbesondere eine ausziehbare Schublade an. Auch wenn kein direkter Empfang von Satellitensignalen möglich sein sollte, kann durch eine Anbringung an einen in den Fahrzeuginnenraum vorstehenden Teil des Gehäuses die Empfangscharakteristik der Antenne verbessert werden, da hierdurch die Antenne eine exponierte Position einnimmt, die der einer nicht am Gehäuse angebrachten Antenne ähnelt, und der Abstand zu einem elektrisch leitfähigen Teil des Gehäuses vergrößert wird.

Die Erfindung sieht weiterhin vor, dass das Gehäuse in einen Schacht mit Abmessungen entsprechend einer Norm ISO 7736 einbaubar sein kann. Hierdurch entspricht das Gehäuse einer Normgröße für den Einbau in Konsolen eines Fahrzeugs, beispielsweise in ein Radiofach. Das Gehäuse des Bordinformationssystems ist damit in Modelle verschiedener Hersteller einfach und problemlos ein- und auszubauen.

In vorteilhafter Weise kann ein elektrisch leitfähiger Teil des Gehäuses auf einer der Empfangsrichtung der Antenne abgewandten Seite der Antenne angebracht sein. Somit wird ausgeschlossen, dass die Antenne von elektrisch leitfähigen Teilen überdeckt wird und dadurch der Empfang verschlechtert wird.

Das erfindungsgemäße Bordinformationssystem umfasst weiterhin eine Mobilfunkantenne zum Empfang von MobilfunkSignalen und ein Mobilfunk-Modul. Hierdurch wird die Variabilität des Bordinformationssystems weiter erhöht, indem auch ein Datenaustausch über Mobilfunk stattfinden kann.

Eine vorteilhafte Weiterbildung sieht vor, dass ein elektrisch leitender Bestandteil des Gehäuses des Bordinformationssystems und die strahlende Fläche der Mobilfunkantenne einen Abstand von mindestens 50 % einer Gesamthöhe der Mobilfunkantenne aufweisen können. In einer besonders vorteilhaften Weiterbildung beträgt der Abstand der strahlenden Fläche der Mobilfunkantenne zu einem elektrisch leitenden Bestandteil mindestens 100 % der Gesamthöhe der Mobilfunkantenne. Durch den Abstand von mindestens 50 % der Gesamthöhe der Mobilfunkantenne ist gewährleistet, dass die Mobilfunkantenne noch kompakt mit dem Gehäuse verbaubar ist, da die Abmessungen klein gehalten werden, aber auch ein ausreichender Abstand zu elektrisch leitenden Bestandteilen des Gehäuses besteht, welche die Leistung der Mobilfunkantenne negativ beeinflussen.

Die Erfindung sieht weiterhin vor, dass die Mobilfunkantenne und die Antenne zum Empfang satellitenbasierter Geopositionsdaten auf einander gegenüberliegenden Seiten des Gehäuses angebracht sind. Somit beeinflusst die Mobilfunkantenne den Empfang der Antenne zum Empfang satellitenbasierter Geopositionsdaten nicht, da der Abstand zwischen beiden Antennentypen maximal ist, während das Gehäuse immer noch eine kompakte Bauform aufweist und beide Einheiten daran angebracht sind. Bei einer Positionierung der Mobilfunkantenne und der Antenne zum Empfang satellitenbasierter Geopositionsdaten ist nämlich nicht auszuschließen, dass die Mobilfunkantenne den Empfang der anderen Antenne stört oder sogar ganz unterbindet.

In besonders vorteilhafter Weise kann ein Bordinformationssystem mit den genannten Merkmalen in einem Fahrzeug als Tachograph, insbesondere als digitaler Tachograph, und bzw. oder als Mauterfassungsgerät verwendet werden, wobei bei einer Kombination der Merkmale von Tachograph und Mauterfassungsgerät von einer Universal Onboard Unit gesprochen wird. Hierdurch wird eine technische Erweiterung dieser Geräte erreicht. Der Tachograph bzw. das Mauterfassungsgerät können hierfür einen Prozessor, eine Speichereinheit und einen Datenbus aufweisen. Der Datenbus empfängt Signale, die von einem oder mehreren Sensoren, geliefert werden. Die Sensoren können beispielsweise im Motorblock oder an Wellen des Fahrzeugs platziert sein und beispielsweise Umdrehungen der Wellen messen. Die vom Datenbus empfangenen Daten werden durch den Prozessor verarbeitet und in der Speichereinheit abgelegt. Von dort können sie ausgelesen werden und auf eine externe Speichereinheit kopiert werden bzw. auf einer Anzeigeeinheit des Bordinformationssystems ausgegeben werden. Das Modul zur Verarbeitung satellitenbasierter Geopositionsdaten und das Mobilfunkmodul sind direkt mit einem internen Bus des Prozessors verbunden, sodass hier eine unmittelbare Verarbeitung der empfangenen Daten erfolgen kann. Fahrzeugrelevante Größen, die von einem Tachographen bzw. Mauterfassungssystem erfasst werden, können z. B. Geschwindigkeit, aktuelle Koordinaten oder Temperaturen sein.

Ausführungsbeispiele der Erfindung sind in den Zeichnungen dargestellt und werden nachfolgend anhand der Figuren 1 bis 7 erläutert. Es zeigen:
- Fig. 1: eine perspektivische vorderseitige Ansicht eines Gehäuses eines Bordinformationssystems mit einer Antenne,
- Fig. 2: eine Fig. 1 entsprechende Darstellung des Gehäuses eines Bordinformationssystems, bei der die Antenne mit einer Abdeckung versehen ist,
- Fig. 3: eine Fig. 2 entsprechende Darstellung des Gehäuses eines Bordinformationssystems, bei dem die mit einer Abdeckung versehene Antenne an einer ausgezogenen Schublade angebracht ist,
- Fig. 4: eine vorderseitige Explosionszeichnung der Schublade mit Antenne und Abdeckung,
- Fig. 5: eine rückseitige Explosionszeichnung der Schublade mit Antenne und Abdeckung,
- Fig. 6: eine perspektivische rückseitige Ansicht eines Gehäuses eines Bordinformationssystems mit einer Ausnehmung,
- Fig. 7: eine Mobilfunkantenne zur Integration in ein Bordinformationssystem,
- Fig. 8: eine Fig. 6 entsprechende Darstellung des Gehäuses des Bordinformationssystems mit integrierter Mobilfunkantenne,
- Fig. 9: einen Schnitt durch das Gehäuse parallel zu einer Rückseite des Bordinformationssystems mit integrierter Mobilfunkantenne und
- Fig. 10: eine Fig. 6 entsprechende Darstellung des Gehäuses des Bordinformationssystems mit integrierter Mobilfunkantenne sowie Abdeckung für die Mobilfunkantenne.

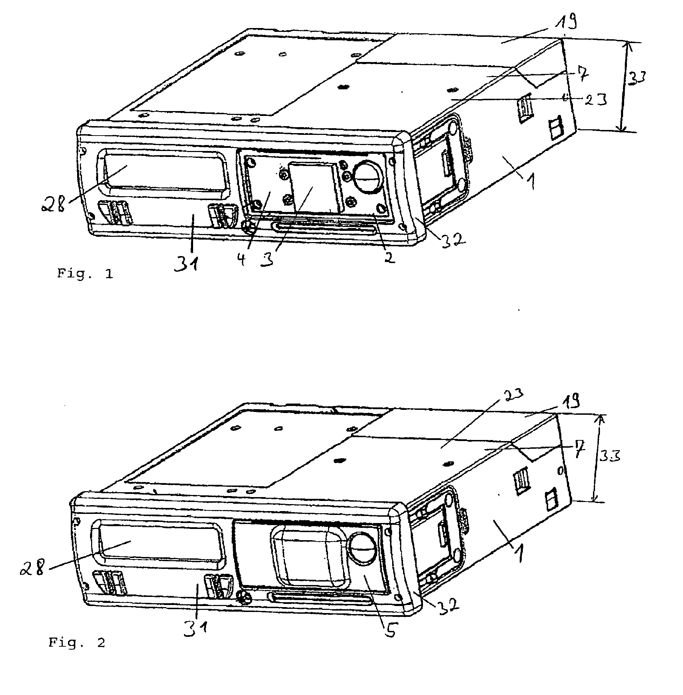

In Fig. 1 ist das Gehäuse 1 eines erfindungsgemäßen Bordinformationssystems in Vorderansicht gezeigt, d. h. die gezeigte Vorderseite 31 des Gehäuses 1 ist nach einem Einbau einem Fahrzeuginnenraum zugewandt, also einem Benutzer, wie beispielsweise dem Fahrer, zugänglich. Das Bordinformationssystem ist im dargestellten Fall ein digitaler Tachograph, es kann allerdings auch als konventioneller Tachograph, Mauterfassungsgerät oder als Universal Onboard Unit ausgestaltet sein bzw. derartige Geräte umfassen.

Die Abmessungen des Gehäuses 1 sind entsprechend einer Norm ISO 7736 oder DIN 75490 gewählt, sodass ein Einbau in Schächte, beispielsweise Radioschächte in der Instrumententafel eines Fahrzeugs, bei einer Vielzahl von Modellen unterschiedlicher Hersteller problemlos möglich ist. Das Gehäuse 1 besteht im Wesentlichen aus einem leitfähigen Material, im vorliegenden Fall einem Metall. Alternativ kann das Gehäuse 1 auch aus einem elektrisch nicht leitfähigen Material bestehen. Eine Gehäusehöhe 33 beträgt im dargestellten Ausführungsbeispiel 50 mm.

An der Vorderseite 31 des Gehäuses 1 befindet sich eine Blende 32 zur ästhetischen Verschönerung und Schutz des Gehäuses 1. Die Blende 32 besteht aus einem dielektrischen Material. Weiter ist an der Vorderseite ein Anzeigeelement 28 zur Anzeige von einer oder mehreren erfassten fahrzeugrelevanten Größe angebracht. Die Blende 32 weist hierfür eine entsprechende Ausnehmung auf. Fahrzeugrelevante Größen können z. B. Geschwindigkeit, aktuelle Koordinaten, Temperaturen oder insgesamt zurückgelegte Strecke, allerdings auch Lenk- und Ruhezeiten eines Fahrers sein. An der Vorderseite 31 des Gehäuses 1 können auch hier nicht dargestellte Bedienelemente zur Einstellung verschiedener Parameter, beispielsweise zur Umstellung der Datenerfassung zwischen einem ersten und einem zweiten Fahrer, oder Buchsen zur Aufnahme verschiedener Stecker, beispielsweise für externe Speichereinheiten, platziert sein.

An der Vorderseite 31 ist eine Antenne 2 zum Empfang satellitenbasierter Geopositionsdaten angeordnet. Im dargestellten Ausführungsbeispiel umfasst die Antenne 2 einen Empfangskörper 3 und eine Massefläche 4, wobei der Empfangskörper 3 mittig auf der Massefläche 4 platziert ist. Die Massefläche 4 ist dabei an das Gehäuse 1 über eine Schraub-, Kleb- oder Klemmverbindung angebracht. Die Antenne 2 ist eine Patch-Antenne mit Keramikgrundkörper, die Massefläche 4 besteht aus einer mit Kupfer kaschierten Leiterplatte. Statt einer Patch-Antenne können auch andere Antennenbauformen verwendet werden. Die Massefläche 4 kann auch aus einem leitfähigen Material ohne Kaschierung bestehen und Ausnehmungen, beispielsweise für Bedienelemente wie Schubladenentriegelungen, aufweisen.

Der Empfangskörper 3 ist so angeordnet, dass eine Empfangsrichtung der Antenne 2 im eingebauten Zustand in den Fahrzeuginnenraum gerichtet ist und elektrisch leitfähige Teile des Gehäuses 1 dieser Empfangsrichtung der Antenne 2 entgegengesetzt angeordnet sind. Zum verbesserten Empfang kann die Antenne 2 eine Richtwirkung aufweisen, also in einer Richtung besonders gut zum Empfang geeignet sein. Die Richtwirkung kann dabei durch eine als Reflektor dienende Metallschicht, die hinter dem Empfangskörper 3 liegt, erzeugt werden. Die von der Antenne 2 empfangenen Geopositionsdaten werden an ein Modul zur Verarbeitung der Geopositionsdaten weitergeleitet, welches hier allerdings, ebenso wie die Verbindung zwischen Antenne 2 und Modul, aufgrund der Lage dieser Teile im Inneren des Gehäuses 1 nicht gezeigt ist.

Im dargestellten Ausführungsbeispiel der Fig. 1 ist die Antenne 2 nicht abgedeckt und der Empfangskörper 3 weist Abmessungen auf, die ungefähr einer halben Wellenlänge des zu empfangenden Signals entsprechen. Der Empfangskörper 3 weist eine quadratische Außenfläche auf und ist auf den Empfang von rechtszirkular polarisierten Signalen ausgelegt. Alternativ kann der Empfangskörper 3 auch auf den Empfang linear polarisierter Wellen ausgelegt sein, wobei in diesem Fall die Außenfläche rechteckig ausgeführt ist und eine Seite doppelt so lang wie die andere Seite des Rechtecks ist. Die Antenne 2 kann Geopositionsdaten nach dem GPS-Standard und/oder einem der Standards anderer satellitengestützter Navigationssysteme wie Galileo, GLONASS, COMPASS, IRNSS oder QZSS empfangen.

Die Massefläche 4 weist eine möglichst große Fläche auf und ist gleichmäßig um den Empfangskörper 3 platziert. Die in den Fahrzeuginnenraum weisende Oberfläche des Empfangskörpers 3 und die Massefläche 4 sind parallel zueinander angeordnet. Die Massefläche 4 weist Ausnehmungen auf, die zur Verbindung der Antenne 2 mit dem Gehäuse 1 dienen, beispielsweise durch Verschrauben, Vernieten oder Klemmen. Alternativ zu den genannten Verfahren kann die Massefläche 4 auch durch eine Klebeverbindung mit dem Gehäuse 1 verbunden sein. Die komplette Antenne 2 weist eine Fläche auf, die zwischen einem Drittel und der Hälfte der Vorderseite 31 des Gehäuses 1 überdeckt, um einen möglichst guten Empfang der Geopositionssignale zu ermöglichen.

Im in Fig. 1 dargestellten Ausführungsbeispiel ist auf einer Oberseite 23 der Außenseite 7 eine Abdeckung 19 angebracht, die darunter liegende Teile vor mechanischer Beeinträchtigung schützen soll und durch ihre Form einen bündigen Anschluss an die Außenseite 7 des Gehäuses 1 herstellt. Die Abdeckung 19 ist aus einem dielektrischen, also nicht oder nur schwach elektrisch leitfähigem Material, im vorliegenden Fall aus Kunststoff. Auch das restliche Gehäuse 1 kann durch eine Abdeckung vor mechanischer Beschädigung geschützt werden. Außerdem kann die Abdeckung 19 auch an einer hier nicht gezeigten Unterseite des Gehäuses 1 angebracht sein.

Im Inneren des Gehäuses 1 und daher in Fig. 1 nicht dargestellt befinden sich außerdem noch weitere Bestandteile eines Tachographen, insbesondere ein Prozessor oder ein programmierbarer Mikrocontroller, eine Speichereinheit und ein Datenbus. Der Datenbus empfängt Daten von Sensoren, die an verschiedenen Punkten des Fahrzeugs angebracht sind, z. B. ein an einer Welle angebrachter Taktgeber. Diese Daten werden durch den Prozessor verarbeitet und in einer Speichereinheit gespeichert. Die gespeicherten Daten sind auf dem Anzeigeelement 28 ausgebbar oder können auf einen externen Speicher übertragen werden. Das Modul zur Verarbeitung der Geopositionsdaten ist direkt mit einem Bus des Prozessors verbunden, sodass durch das Modul verarbeitete Daten einer direkten Weiterverarbeitung zugeführt werden.

In den folgenden Figuren sind gleiche Elemente jeweils mit den gleichen Bezugszeichen versehen. Fig. 2 stellt eine Fig. 1 entsprechende Ansicht eines Bordinformationssystems dar, allerdings ist die Antenne 2 nun durch eine Antennenabdeckung 5 vor mechanischer Beeinträchtigung geschützt. Die Antennenabdeckung 5 ist ebenfalls aus einem dielektrischen, also nicht oder nur schwach elektrisch leitfähigem Material, im vorliegenden Fall aus Kunststoff, und schließt bündig mit dem restlichen Gehäuse 1 ab bzw. kann auch Teil der Blende 32 sein. Im dargestellten Ausführungsbeispiel bildet die Antennenabdeckung 5 die Form der Antenne 2 nach, d. h. an der Position des Empfangskörpers 3 steht die Antennenabdeckung 5 in den Fahrzeuginnenraum vor. Alternativ kann die Antennenabdeckung 5 auch eine flache Vorderseite ohne Erhebungen oder Vertiefungen aufweisen. Die Antennenabdeckung 5 überdeckt die komplette Fläche der Antenne 2, weist allerdings eine Aussparung für ein Bedienelement auf. Die Antennenabdeckung 5 ist im dargestellten Ausführungsbeispiel auf die Antenne 2 geklebt, kann allerdings auch durch Rastverbindungen, eine Klemmung oder eine Verschraubung daran befestigt sein. Abdeckung 5 und Antenne 2 berühren einander flächig, es kann allerdings auch eine Abdeckung verwendet werden, die einen Zwischenraum zur Antenne 2 oder einzelnen Teilen davon aufweist, die also beispielsweise nur mit dem Empfangskörper 3 verbunden ist.

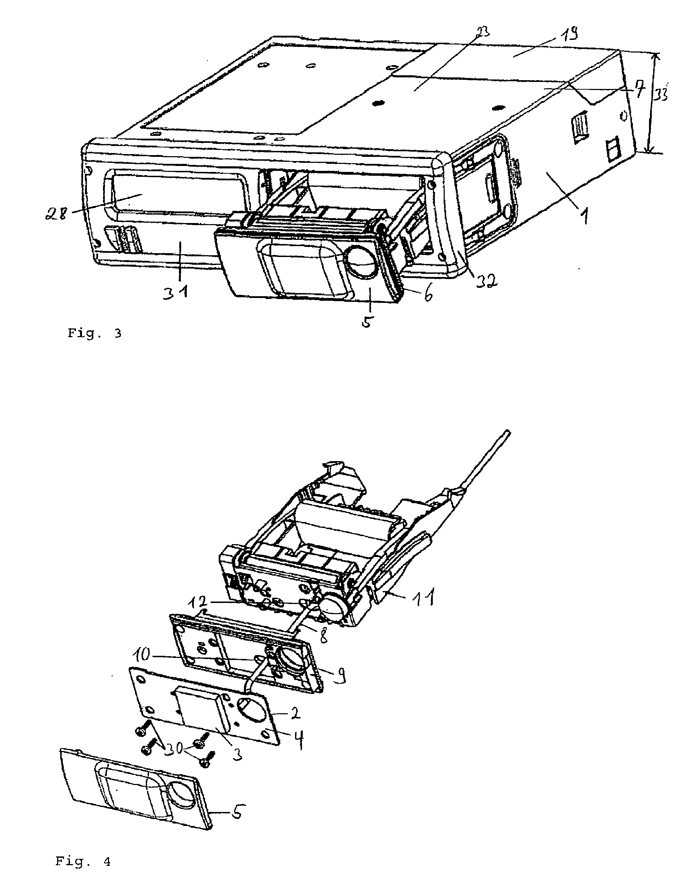

In Fig. 3 ist ein Bordinformationssystem entsprechend Fig. 2 dargestellt, allerdings ist die Antenne 2, die auch in dieser Figur von der Antennenabdeckung 5 abgedeckt wird, an einer aus dem Gehäuse 1 ausziehbaren Schublade 6 befestigt. Die Schublade 6 kann beispielsweise eine Druckerschublade sein, in die eine Papierrolle zum Ausdrucken der erfassten fahrzeugrelevanten Daten eingelegt wird und die beispielsweise zum Wechsel der Papierrolle herausgezogen werden kann. Die Anbringung der Antenne 2 an der dem Fahrzeuginnenraum zugewandten Außenseite der Schublade 6 bietet den Vorteil, dass die Antenne 2 im ausgezogenen Zustand der Schublade 6 weiter in den Fahrzeuginnenraum hineinragt, somit besser Signale empfangen kann, und gleichzeitig einen größeren Abstand zu elektrisch leitfähigen Teilen des Gehäuses 1 aufweist, was den Empfang ebenfalls begünstigt. Dies ist vorteilhaft, da in einem Fahrzeuginnenraum im Allgemeinen nur indirekte Satellitensignale empfangen werden können, also Signale, die erst durch ein die Signalleistung schwächendes Element wie eine Scheibe in den Fahrzeuginnenraum gelangen, deren Signalstärke nochmals niedriger als bei direkten Signalen ist. Außerdem werden die Signale im Fahrzeuginnenraum in aller Regel reflektiert, bevor sie empfangen werden und büßen hierbei wiederum Signalstärke ein.

In Fig. 4 ist in einer Explosionszeichnung der genaue Aufbau der in Fig. 3 bereits gezeigten Schublade 6 in Vorderansicht dargestellt. Die Schublade 6 besteht aus einem Schubladenkern 11, auf dem alle anderen Elemente befestigt werden und der im Gehäuse 1 versenkbar ist. Im Fall einer Druckerschublade wird die Papierrolle im Schubladenkern 11 platziert. Der Schubladenkern 11 kann aus einem elektrisch leitfähigen oder dielektrischen Material bestehen. Auf der dem Fahrzeuginnenraum zugewandten Seite des Schubladenkerns 11 wird eine Aufnahmeplatte 9 befestigt, was durch Verschrauben, Verklemmen oder Verkleben erfolgen kann. Die Aufnahmeplatte 9 besteht aus einem dielektrischen Material und weist eine Aussparung zur passgenauen Aufnahme eines hier nicht dargestellten Verstärkers der Antenne 2 auf, der auf der Rückseite der Massefläche 4 angebracht ist. Auf die Aufnahmeplatte 9 wird die Antenne 2 befestigt, was wiederum durch Verschrauben, Verklemmen oder Verkleben erfolgen kann. Im dargestellten Ausführungsbeispiel erfolgt die Befestigung der Antenne 2 durch mindestens eine Schraube 30 direkt am Schubladenkern 11, indem in der Massefläche 4 und Aufnahmeplatte 9 Aussparungen für die Schrauben enthalten sind. Die Antenne 2 wird durch die Abdeckung 5 abgedeckt. Die Antenne 2 ist durch ein Antennenkabel 8, im vorliegenden Fall ein Koaxialkabel, mit dem im Inneren des Gehäuses 1 liegenden Modul zur Verarbeitung satellitenbasierter Geopositionsdaten verbunden. Antenne 2, Aufnahmeplatte 9 und die Vorderseite des Schubladenkerns 11 weisen im Wesentlichen die gleiche Fläche auf, so dass die Antenne 2 die zum Fahrzeuginnenraum weisende Fläche der Schublade 6 überdeckt.

Das Antennenkabel 8 ist auf der dem Fahrzeuginnenraum abgewandten Seite der Antenne 2 mit dieser verbunden und wird durch eine Aufnahmeplattendurchführung 10 der Aufnahmeplatte 9 und eine Schubladenkerndurchführung 12 des Schubladenkerns 11 in das Innere des Gehäuses 1 geführt. Die Länge des Antennenkabels 8 ist derart bemessen, dass die Schublade 6 geöffnet werden kann, ohne das Antennenkabel 8 zu spannen. Die Aufnahmeplattendurchführung 10 und die Schubladenkerndurchführung 12 sind als Langloch ausgestaltet und weisen eine Breite auf, die geringfügig größer ist als der Durchmesser des durchgeführten Antennenkabels 8, wobei durch die Ausgestaltung als Langloch eine erleichterte Montage des Antennenkabels 8 ermöglicht wird. Die Aufnahmeplattendurchführung 10 und die Schubladenkerndurchführung 12 liegen auf der Aufnahmeplatte 9 und dem Schubladenkern 11 an gleichen Positionen, es können jedoch auch verschiedene Positionen auf beiden Bauteilen dafür vorgesehen sein.

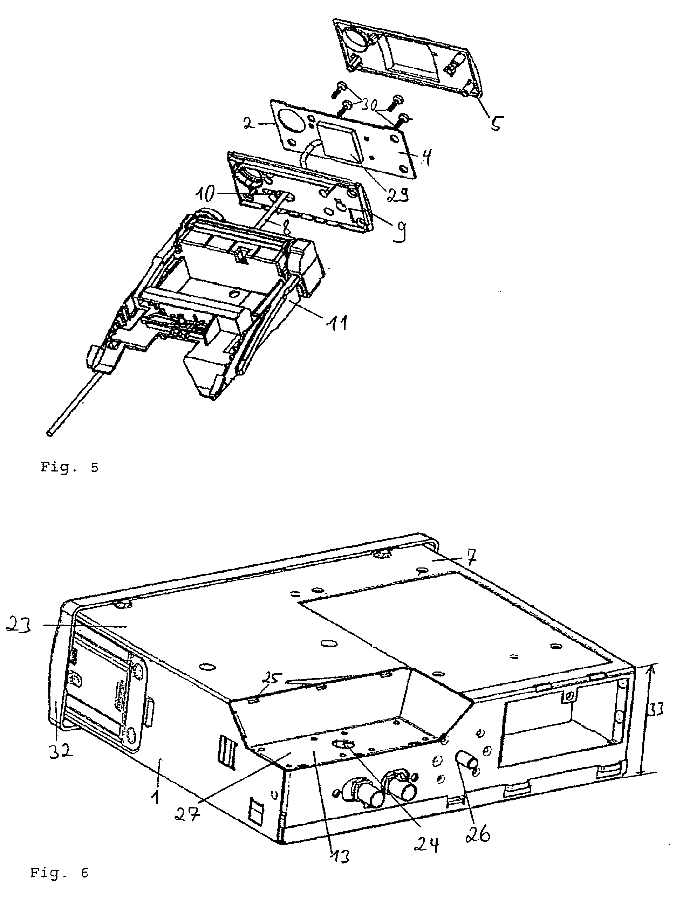

In Fig. 5 ist die Schublade 6 entsprechend Fig. 4 gezeigt, nun allerdings in einer rückseitigen Ansicht. An der Rückseite der Antenne 2 ist ein Verstärker 29 angeordnet, der die von dem in dieser Darstellung nicht sichtbaren Empfangskörper 3 empfangenen Signale verstärkt und über das am Verstärker 29 befestigte Antennenkabel 8 weiterleitet. Der Verstärker 29 befindet sich auf der Rückseite der Antenne 2 an der Position, an der sich auf der Vorderseite der Antenne 2 der Empfangskörper 3 befindet, der Verstärker 29 kann sich jedoch auch an einer anderen Position befinden.

Fig. 6 stellt ein Gehäuse 1 eines erfindungsgemäßen Bordinformationssystems in perspektivischer Rückansicht dar, d. h., die gezeigte Seite des Gehäuses 1 ist nach einem Einbau einem Fahrzeuginnenraum abgewandt bzw. durch einen Einbauschacht überdeckt. Das Gehäuse 1 weist eine Ausnehmung 13 auf einer Oberseite 23 einer Außenseite 7 auf. Diese Ausnehmung 13 wurde in Fig. 1 von der Abdeckung 19 überdeckt. Die Ausnehmung 13 dient der Aufnahme einer Mobilfunkantenne, die auf einer der Antenne 2 gegenüberliegenden Seite des Gehäuses 1 angebracht ist, damit sich beide Antennen nicht gegenseitig stören. Da die Antenne 2 zum Empfang satellitenbasierter Geopositionsdaten wesentlich schwächere Signale empfangen soll, muss diese an einer exponierten Stelle des Gehäuses angebracht werden und einen möglichst großen Abstand zu einer Mobilfunkantenne aufweisen. Die Mobilfunkantenne empfängt und sendet Signale mit einer wesentlich größeren Signalstärke und kann daher einen Empfang der Antenne 2 stören oder ganz unterbinden.

Im Bereich der Ausnehmung 13 weist das Gehäuse 1 eine zusammenhängende Oberfläche auf, die einteilig mit dem Gehäuse 1 verbunden ist. Die Ausnehmung 13 weist eine zu einer Oberseite 23 des Gehäuses 1 parallel angeordnete Auflagefläche 27 für einen Fuß einer Mobilfunkantenne auf, welche mit der Oberseite 23 des Gehäuses 1 durch abgeschrägte Flanken verbunden ist. Die Ausnehmung 13 weist abgeschrägte Kanten auf, um einerseits einen ausreichenden Abstand zwischen einer Mobilfunkantenne und dem Gehäuse 1 zu gewährleisten. Andererseits wird durch die abgeschrägten Kanten im Inneren des Gehäuses 1 noch Platz zum Einbau weiterer Module oder Bauteile zur Verfügung gestellt. Die Flanken verlaufen im gezeigten Ausführungsbeispiel in einem Winkel von 45°, es sind allerdings auch andere Winkel, vorzugsweise im Bereich zwischen 30° und 60°, möglich. Im dargestellten Fall liegt die Ausnehmung 13 am Rand des Gehäuses 1. In einem Beispiel allerdings kann die Ausnehmung 13 auch mittig im Gehäuse 1 liegen. Die Ausnehmung 13 kann auch quaderförmig sein, also keine abgeschrägten Flanken aufweisen bzw. alternativ auch an mindestens einer Seite eine abgeschrägte Flanke aufweisen und an mindestens einer anderen Seite eine rechtwinklige Flanke. Auch ein einzelner Ausschnitt aus dem Gehäuse 1 in Form eines Lochs ist als Ausnehmung 13 von der Erfindung umfasst, wobei in diesem Fall eine Mobilfunkantenne in der entstehenden Vertiefung platziert wird.

Das Bordinformationssystem umfasst außerdem ein Mobilfunk-Modul, welches in Fig. 6 nicht dargestellt ist, da es sich im Inneren des Gehäuses 1 befindet und von diesem verdeckt wird. Das Mobilfunk-Modul ist wie das Modul zur Verarbeitung satellitenbasierter Geopositionsdaten direkt mit einem Bus des Prozessors oder eines programmierbaren Mikrocontrollers verbunden, sodass durch das Mobilfunk-Modul verarbeitete Daten einer direkten Weiterverarbeitung im Prozessor zugeführt werden. Die Ausnehmung 13 ist aus einer Oberseite 23 des Gehäuses 1 ausgenommen, kann allerdings ebenso auf einer in Fig. 6 nicht sichtbaren Unterseite liegen. Die Oberfläche der Ausnehmung 13 ist als geschlossene Fläche ausgebildet, wobei die Auflagefläche 27 einer Mobilfunkantenne die gleichen Maße wie ein Fuß einer Mobilfunkantenne aufweist, die Maße können auch größer als ein Antennenfuß sein. Eine Mobilfunkantenne ist auf der nach einem Einbau dem Fahrzeuginnenraum abgewandten Seite angebracht, um einen möglichst großen Abstand zur an der Vorderseite 31 angebrachten Antenne 2 zu ermöglichen sowie an der Vorderseite 31 den Einbau von Anzeige- und Kontrollelementen zu ermöglichen. In einem Beispiel jedoch kann die Ausnehmung 13 für eine Mobilfunkantenne an jeder Position des Gehäuses 1 erfolgen, also auch an einer dem Fahrzeuginnenraum zugewandten Seite.

Die Ausnehmung 13 enthält eine Gehäusedurchführung 24, durch die eine in der Ausnehmung 13 platzierte Mobilfunkantenne mit im Inneren des Gehäuses 1 integrierten Bauteilen verbunden werden kann. Außerdem weist die Ausnehmung 13 mindestens eine Aufnahme 25 zur Verbindung der Abdeckung 19 an der Ausnehmung 13 auf. Im in Fig. 6 dargestellten Ausführungsbeispiel sind für eine bessere Befestigung mehrere Aufnahmen 25 enthalten. Die Aufnahmen 25 sind im dargestellten Fall für die Aufnahme von Rastzungen einer Abdeckung 19 konzipiert, es kann allerdings auch eine Verschraubung zur Befestigung der Abdeckung 19 mit dem Gehäuse 1 vorgesehen sein. Die Aufnahmen 25 weisen einen Abstand von maximal 50 mm auf, um lange Kanten zu vermeiden, da diese Kanten als Antennen wirken und somit den Empfang der Mobilfunkantenne 17 stören können.

Das Gehäuse 1 weist als Befestigungselement zum festen Einbau im Fahrzeuginnenraum mindestens einen Gewindebolzen 26 auf, der der Befestigung des Gehäuses 1 an einer Befestigungsvorrichtung des Fahrzeuginnenraums, beispielsweise durch Verschraubung des Gewindebolzens mit einer Schraubenmutter, oder zur elektrischen Kontaktierung mit anderen im Fahrzeuginnenraum positionierten Bauelementen dient. Der Gewindebolzen 26 ist im dargestellten Ausführungsbeispiel an einem Bereich des Gehäuses 1 hinter der Blende 32 angebracht.

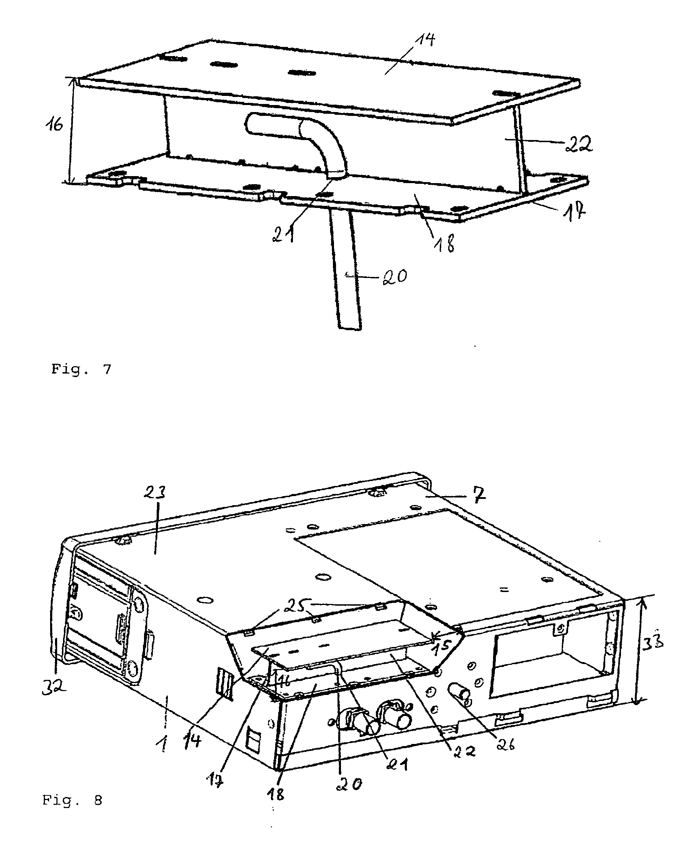

In Fig. 7 ist ein Ausführungsbeispiel einer Mobilfunkantenne 17 dargestellt. Im in Fig. 7 dargestellten Fall ist die Mobilfunkantenne 17 als PIFA-Antenne, also als "Planar Inverted F-Shaped Antenna" ausgebildet. Hierbei ist eine strahlende Fläche 14 mit einem Fuß 18 elektrisch durch ein Verbindungselement 22, das als Kurzschlussleitung dient, verbunden. Strahlende Fläche 14 und Fuß 18 sind zueinander parallel angeordnet, eine Gesamthöhe 16 ergibt sich als Abstand zwischen einer Oberseite der strahlenden Fläche 14 und einer hier nicht sichtbaren Unterseite des Fußes 18. Die Mobilfunkantenne 17 ist aus einem elektrisch leitfähigen Material, insbesondere einem Metall, gefertigt. Die in die Ausnehmung 13 einsetzbare Mobilfunkantenne kann allerdings auch in einer anderen Bauform realisiert werden, beispielsweise als Patch-Antenne.

Als Anspeiseleitung bzw. zur Verbindung mit dem Mobilfunk-Modul oder anderen Modulen, die im Gehäuse 1 platziert sein können, umfasst die Mobilfunkantenne 17 ein Kabel 20, im vorliegenden Fall ein Koaxialkabel, welches durch eine im Fuß 18 der Mobilfunkantenne 17 enthaltene Aussparung 21 geführt wird. Das Kabel 20 kann mit der Mobilfunkantenne 17 verlötet, verschraubt oder an diese geklemmt sein, insbesondere an das Verbindungselement 22 oder die strahlende Fläche 14.

An der Oberfläche der Ausnehmung 13 ist eine der Aussparung 21 entsprechende Gehäusedurchführung 24 für das Kabel 20 enthalten. Die Aussparung 21 kann wie im dargestellten Fall ein Loch im Fuß 18 sein, allerdings auch eine Aussparung an einem Rand des Fußes 18. Die Aussparung 21 ist in ihrem Durchmesser nur unwesentlich größer als der Durchmesser des Kabels 20 und von kleinerem oder gleich großem Durchmesser wie die Gehäusedurchführung 24. Ist der Durchmesser der Gehäusedurchführung 24 größer als der Durchmesser der Aussparung 21, kann beispielsweise ein Antennenstecker zu einem Ende des Kabels 20 durchgesteckt werden. Durch diese Bauform wird die Leistung der Mobilfunkantenne 17 erhöht, während das Kabel 20 die nur unwesentlich größere Aussparung 21 nahezu vollständig füllt und somit keine negative Beeinflussung der Leistung stattfindet, da ein nicht vom Kabel 20 gefüllter Teil der Fläche der Gehäusedurchführung 24 vom Fuß 18 abgedeckt wird. Durch diese Bauform wird die Leistung der Mobilfunkantenne 17 erhöht, während das Kabel 20 die nur unwesentlich größere Aussparung 21 nahezu vollständig füllt und somit keine negative Beeinflussung der Leistung stattfindet.

Die Mobilfunkantenne 17 ist zum Empfang verschiedener Mobilfunksignale geeignet, beispielsweise von Signalen nach dem GSM-, dem GPRS-, dem UMTS-, dem CDMA-, dem LTE- oder einem anderen Standard. Die Abmessungen der Mobilfunkantenne 17 sind kleiner oder gleich den Abmessungen der Ausnehmung 13. Hierdurch wird gewährleistet, dass die Mobilfunkantenne 17 nicht aus dem Gehäuse 1 ragt und somit ein Einbau in den Fahrzeuginnenraum leichter vorgenommen werden kann.

In Fig. 8 ist die in Fig. 7 gezeigte Mobilfunkantenne 17 auf einer Außenseite 7 des in Fig. 6 dargestellten Gehäuses 1 des Bordinformationssystems in der Ausnehmung 13 angebracht. Der Fuß 18 der Mobilfunkantenne 17 ist hierbei flächig mit der Außenseite 7 des Gehäuses 1 verbunden, sodass eine Masseverbindung zwischen dem als Massefläche der Mobilfunkantenne 17 dienenden Fuß 18 und einer Massefläche des Gehäuses 1, die durch die elektrisch leitfähige Außenseite 7 des Gehäuses 1 gegeben ist, sichergestellt ist. Das Kabel 20 ist durch die Aussparung 21 und die Gehäusedurchführung 24 ins Innere des Gehäuses 1 geführt. Die Verbindung der Mobilfunkantenne 17 kann über Vernieten, Verlöten, Verschrauben oder Verkleben erfolgen. Die Abmessungen der Mobilfunkantenne 17 sind kleiner bzw. gleich den Abmessungen der Ausnehmung 13. Somit kann auch mit integrierter Mobilfunkantenne 17 das Gehäuse 1 in einen Schacht mit Abmessungen nach ISO 7736 oder DIN 75490 eingebaut werden.

Die Oberseite der strahlenden Fläche 14 befindet sich auf gleicher Höhe wie die Oberseite 23 des Gehäuses 1 oder geringfügig unterhalb der Oberseite 23. Die strahlende Fläche 14 der Mobilfunkantenne 17 ist in einem Abstand 15 von der Oberfläche der Ausnehmung 13 angebracht. Der Abstand 15 beträgt im dargestellten Fall etwa 100 % der Gesamthöhe 16 der Mobilfunkantenne 17, sodass eine Abstrahlung nicht behindert wird und ist sowohl auf der Längs- als auch auf der Querseite der strahlenden Fläche 14 gleich groß. Der Abstand 15 sollte jedoch mindestens 50 % einer Gesamthöhe 16 der Mobilfunkantenne 17 betragen, um die Leistungscharakteristik der Mobilfunkantenne 17 nicht zu stark zu beeinträchtigen. Der Abstand 15 muss jedoch auch nicht an allen Seiten gleich groß sein, sofern jeweils der genannte Mindestabstand nicht unterschritten wird. Somit wird eine höhere Variabilität bezüglich der Integration weiterer Module in den Innenraum des Gehäuses 1 erreicht.

Der Fuß 18 deckt mit seiner Fläche die Gehäusedurchführung 24 im Gehäuse 1 ab, sodass die Leistung der Mobilfunkantenne 17 durch einen größeren Durchmesser der Gehäusedurchführung 24 als dem Durchmesser der Aussparung 21 nicht verschlechtert wird.

Auch bei anderen Formen der Ausnehmung 13, beispielsweise einem Ausschnitt aus dem Gehäuse 1, ist wesentlich, dass die strahlende Fläche 14 der Mobilfunkantenne 17 einerseits nicht über die Abmessungen des Gehäuses 1 hinausragt, um einen einfachen Einbau zu gewährleisten, andererseits aber einen ausreichenden Abstand 15 zu einem elektrisch leitfähigen Teil des Gehäuses 1 sowie eine Positionierung möglichst nahe an der Außenseite 7 des Gehäuses 1 aufweist. Somit wird in kompakter Bauweise eine entsprechend gute Sende- und Empfangscharakteristik der Mobilfunkantenne 17 erreicht. Diese Voraussetzungen sollten unabhängig von der Bauform der Mobilfunkantenne 17 verwirklicht sein, also muss beispielsweise bei Verwendung einer Patch-Antenne deren strahlende Fläche 14 ebenfalls einen Abstand 15 zu elektrisch leitfähigen Teilen des Gehäuses 1 aufweisen und einen bündigen Abschluss mit dem Gehäuse 1 erlauben.

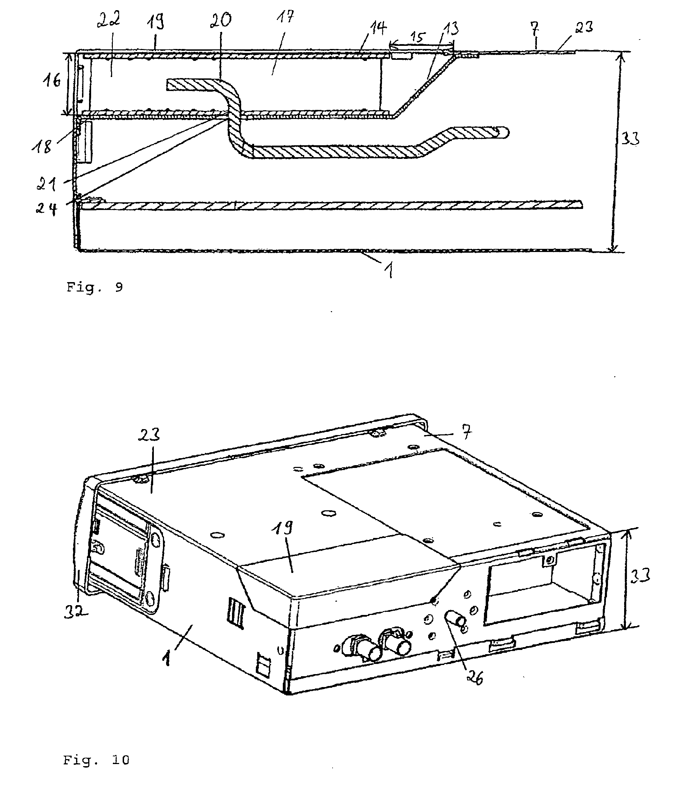

In Fig. 9 ist ein Schnitt durch das Gehäuse 1 parallel zur Rückseite des Gehäuses 1 dargestellt. Das Kabel 20 ist mit der Mobilfunkantenne 17 verbunden und wird durch eine Aussparung 21 im Fuß 18 der Mobilfunkantenne 17 und die Gehäusedurchführung 24 in das Innere des Gehäuses 1 geführt. Die Ausnehmung 13 weist abgeschrägte Flanken auf, um einen Abstand 15, der, wie bereits erläutert, etwa 100 % der Gesamthöhe 16 der Mobilfunkantenne 17 beträgt, zwischen der strahlenden Fläche 14 und dem Gehäuse 1 zu gewährleisten. Der Fuß 18 der Mobilfunkantenne 17 ist bündig an einer Oberfläche der Ausnehmung 13 befestigt. Die Abmessungen des Fußes 18 und der Auflagefläche des Fußes 18 auf der Ausnehmung 13 weisen im Wesentlichen die gleiche Größe auf. Hierdurch kann eine gute Kontaktierung bei geringem Platzbedarf realisiert werden.

Zusätzlich ist die Mobilfunkantenne 17 durch eine Abdeckung 19 vor mechanischer Beschädigung geschützt. Die Abdeckung 19 weist Rastzungen auf, die in die Aufnahmen 25 eingebracht werden und darin einrasten. Hiermit kann eine zuverlässige Verbindung hergestellt werden, wobei die Abdeckung 19 auch einfach gelöst werden kann. Alternativ kann auch eine Befestigung der Abdeckung 19 durch Schrauben, eine magnetische Verbindung, Verkleben, Vernieten oder andere Verbindungsmechanismen vorgesehen sein.

Die Abdeckung 19 berührt im dargestellten Ausführungsbeispiel die strahlende Fläche 14 der Mobilfunkantenne 17, allerdings ist auch denkbar, einen Zwischenraum zwischen beiden Teilen zuzulassen. Die Abdeckung 19 führt die Oberseite 23 des Gehäuses 1 bündig fort, sodass eine ebene Oberfläche entsteht, die Abdeckung 19 kann aber auch unterhalb der Oberseite 23 des Gehäuses 1 liegen, sodass eine Stufe oder Schräge zwischen Abdeckung 19 und Oberseite 23 entsteht. Hierdurch ergibt sich ein im Wesentlichen quaderförmiges Gehäuse 1 mit Abdeckung 19, welches einfach ein- und ausbaubar ist.

In Fig. 10 ist aus gleicher Perspektive wie in Fig. 6 das Gehäuse 1 des Bordinformationssystems dargestellt. Fig. 10 entspricht Fig. 1, wobei nun eine rückseitige Ansicht vorliegt. Die Mobilfunkantenne 17 ist nun unter der Abdeckung 19 verborgen. Die Abdeckung 19 bietet einen bündigen Anschluss an die Form des Gehäuses 1, sodass auch mit Abdeckung 19 die Abmessungen passend für einen Einbau in einen Schacht nach ISO 7736 oder DIN 75490 sind. Bei einem Einbau in einen Schacht einer Instrumententafel eines Fahrzeugs sollte der Abstand zwischen der Mobilfunkantenne 17 und weiteren elektrisch leitfähigen Teilen anderer Einbaugeräte, die die Mobilfunkantenne 17 überdecken können (z. B. ein Radio), mindestens 20 mm betragen, um in ausreichender Stärke Signale empfangen und senden zu können.

## Patentansprüche

1. Bordinformationssystem, das ein digitaler Tachograph oder ein Mauterfassungsgerät oder eine die Funktionen von Tachographen und Mauterfassungsgeräten kombinierende Universal Onboard Unit ist, zur Erfassung mindestens einer fahrzeugrelevanten Größe, umfassend ein in einen Fahrzeuginnenraum in einen Schacht mit Abmessungen entsprechend einer Norm ISO 7736 einbaubares Gehäuse (1) und ein Modul zur Verarbeitung satellitenbasierter Geopositionsdaten, wobei eine Antenne (2) zum Empfang satellitenbasierter Geopositionsdaten derart am Gehäuse (1) angeordnet ist, dass im eingebauten Zustand eine Empfangsrichtung zum Fahrzeuginnenraum gerichtet ist, und eine Mobilfunkantenne (17) zum Empfang von Mobilfunk-Signalen und ein Mobilfunk-Modul umfasst ist, **dadurch gekennzeichnet, dass** die Mobilfunkantenne auf einer nach einem Einbau einem Fahrzeuginnenraum abgewandten Seite des Gehäuses angebracht ist und dass die Mobilfunkantenne (17) und die Antenne (29) zum Empfang satellitenbasierter Geopositionsdaten auf einander gegenüberliegenden Seiten des Gehäuses (1) angebracht sind.

2. Bordinformationssystem nach Anspruch 1, **dadurch gekennzeichnet , dass** das Gehäuse (1) eine nur eine Seite des Gehäuses (1) bedeckende Blende (32) aufweist, wobei das Gehäuse (1) in einem Bereich hinter der Blende mindestens ein Befestigungselement für einen festen Einbau im Fahrzeuginnenraum aufweist.

3. Bordinformationssystem nach Anspruch 1 oder Anspruch 2, **dadurch gekennzeichnet, dass** die Antenne (2) eine Patch-Antenne ist.

4. Bordinformationssystem nach einem der vorhergehenden Ansprüche, **dadurch gekennzeichnet, dass** ein Empfangskörper (3) der Antenne (2) mittig auf einer Massefläche (4) der Antenne (2) platziert ist.

5. Bordinformationssystem nach Anspruch 4, **dadurch gekennzeichnet , dass** die Massefläche (4) der Antenne (2) eine, vorzugsweise mit Kupfer, kaschierte Leiterplatte umfasst.

6. Bordinformationssystem nach einem der vorhergehenden Ansprüche, **dadurch gekennzeichnet, dass** die Antenne (2) an einem in den Fahrzeuginnenraum vorstehenden Teil des Gehäuses (1), vorzugsweise an einer Schublade (6), angebracht ist.

7. Bordinformationssystem nach einem der vorhergehenden Ansprüche, **dadurch gekennzeichnet, dass** ein elektrisch leitfähiger Teil des Gehäuses (1) auf einer der Empfangsrichtung der Antenne (2) abgewandten Seite der Antenne (2) angebracht ist.

8. Fahrzeug, enthaltend ein Bordinformationssystem nach einem der vorhergehenden Ansprüche, wobei das Bordinformationssystem derart in einen Fahrzeuginnenraum eingebaut ist, dass die Empfangsrichtung der Antenne (2) zum Fahrzeuginnenraum gerichtet ist.

## Claims

1. Onboard information system, which is a digital tachograph or a toll collection appliance or a universal onboard unit combining the functions of tachographs and toll collection appliances, for capturing at least one vehicle-related variable, comprising a housing (1) which can be installed in a vehicle interior in a slot having dimensions based on a standard ISO 7736 and a module for processing satellite-based geoposition data, wherein an antenna (2) for receiving satellite-based geoposition data is arranged on the housing (1) such that in the installed state a reception direction points toward the vehicle interior, and a mobile radio antenna (17) for receiving mobile radio signals and a mobile radio module are included, **characterized in that** the mobile radio antenna is fitted on a side of the housing which is remote from a vehicle interior following installation and **in that** the mobile radio antenna (17) and the antenna (29) for receiving satellite-based geoposition data are fitted on opposite sides of the housing (1).

2. Onboard information system according to Claim 1, **characterized in that** the housing (1) has a panel (32) which covers only one side of the housing (1), wherein the housing (1) has, in a region behind the panel, at least one mounting element for permanent installation in the vehicle interior.

3. Onboard information system according to Claim 1 or Claim 2, **characterized in that** the antenna (2) is a patch antenna.

4. Onboard information system according to one of the preceding claims, **characterized in that** a reception body (3) of the antenna (2) is positioned centrally on a ground plane (4) of the antenna (2).

5. Onboard information system according to Claim 4, **characterized in that** the ground plane (4) of the antenna (2) comprises a printed circuit board which is laminated, preferably with copper.

6. Onboard information system according to one of the preceding claims, **characterized in that** the antenna (2) is fitted on a portion of the housing (1) which protrudes into the vehicle interior, preferably on a drawer (6).

7. Onboard information system according to one of the preceding claims, **characterized in that** an electrically conductive portion of the housing (1) is fitted on a side of the antenna (2) which is remote from the reception direction of the antenna (2).

8. Vehicle, containing an onboard information system according to one of the preceding claims, wherein the onboard information system is installed in a vehicle interior such that the reception direction of the antenna (2) points toward the vehicle interior.

## Revendications

1. Système d'information à bord, qui est un tachygraphe numérique ou un appareil de détection de péage ou un universal onboard unit combinant les fonctions de tachygraphe et d'appareils de détections de péage, pour la détection d'au moins une grandeur pertinente pour un véhicule, comprenant un boîtier (1) pouvant être, à l'intérieur d'un véhicule, logé dans un puits ayant des dimensions correspondant à une norme ISO 7736 et un module de traitement de données de géoposition par satellite, dans lequel une antenne (2) de réception de données de géoposition par satellite est montée sur le boîtier (1), de manière à ce que, à l'état monté, une direction de réception soit dirigée vers l'intérieur du véhicule et il y a une antenne (17) de téléphonie mobile de réception de signaux de téléphonie mobile et un module de téléphonie mobile, **caractérisé en ce que** l'antenne de téléphonie mobile est mise sur un côté du boîtier éloigné, après un montage, d'un intérieur de véhicule et **en ce que** l'antenne (17) de téléphonie mobile et l'antenne (29) sont, pour la réception de données de géoposition par satellite, mises sur des côtés opposés l'un à l'autre du boîtier (1).

2. Système d'information à bord suivant la revendication 1, **caractérisé en ce que** le boîtier (1) a un écran (32) recouvrant seulement un côté du boîtier (1), le boîtier (1) ayant, dans une partie derrière l'écran, au moins un élément de fixation pour un montage fixe à l'intérieur du véhicule.

3. Système d'information à bord suivant la revendication 1 ou la revendication 2, **caractérisé en ce que** l'antenne (2) est une antenne patch.

4. Système d'information à bord suivant l'une des revendications précédentes, **caractérisé en ce qu'**un corps (3) de réception de l'antenne (2) est placé au milieu sur une surface (4) de masse de l'antenne (2).

5. Système d'information à bord suivant la revendication 4, **caractérisé en ce que** la surface (4) de masse de l'antenne (2) comprend une plaquette à circuit imprimé revêtue, de préférence, de cuivre.

6. Système d'information à bord suivant l'une des revendications précédentes, **caractérisé en ce que** l'antenne (2) est mise sur une partie du boîtier (1) en saillie dans l'intérieur du véhicule, de préférence sur un tiroir (6).

7. Système d'information à bord suivant l'une des revendications précédentes, **caractérisé en ce qu'**une partie conductrice de l'électricité du boîtier (1) est mise sur un côté de l'antenne (2) opposé à la direction de réception de l'antenne (2).

8. Véhicule contenant un système d'information à bord suivant l'une des revendications précédentes, le système d'information à bord étant logé dans un intérieur du véhicule, de manière à ce que la direction de réception de l'antenne (2) soit dirigée vers l'intérieur du véhicule.
